# EUROPEAN PATENT APPLICATION

(11) **EP 4 725 613 A1**
(43) Date of publication of application: **15.04.2026**
(21) Application number: 25206494.4
(22) Date of filing: 02.10.2025
(51) Int. Cl.: B05B 1/00, B05B 15/52, B05B 15/555, B08B 5/02, H01M 10/00

(54) **APPARATUS AND METHOD FOR CLEANING A COATING LIQUID NOZZLE**

(30) Priority: 11.10.2024 KR 20240138746
(71) Applicant: Samsung SDI Co., Ltd., Yongin-si, Gyeongsangnam-do 17084 (KR)
(72) Inventor: LEE, Seungjae, 17084 Yongin-si (KR)
(74) Representative: Marks & Clerk LLP

(57) **Abstract**

A nozzle cleaning apparatus includes a nozzle insertion hole into which a nozzle having a coating liquid discharge hole is inserted, a nozzle accommodation space that accommodates the nozzle inserted into the nozzle insertion hole, an air nozzle that sprays air toward the discharge hole of the nozzle accommodated in the nozzle accommodation space, and an air guide pipe that guides to the air nozzle the air to be sprayed, wherein the air nozzle is configured to spray the air toward the discharge hole from around the nozzle.

## Description

### FIELD

The present disclosure relates to a technology for cleaning a coating liquid discharge nozzle used for manufacturing a secondary battery or the like.

### BACKGROUND

Different from primary batteries that are not designed to be charged, secondary batteries or batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. This secondary battery includes an electrode assembly including a positive electrode and a negative electrode, a case accommodating the same, and a terminal connected to the electrode assembly.

The above information disclosed in this Background section is for enhancement of understanding of the background of the present disclosure, and therefore, it may contain information that does not constitute a related (or prior) art.

### SUMMARY

The present disclosure is directed to providing an apparatus and method for cleaning contaminants remaining at an end of a nozzle using air and a cleaning cloth after the nozzle is coated with a sealer (coating liquid) and inspecting a cleaning state.

According to some aspects of the present disclosure, there is provided a nozzle cleaning apparatus including a nozzle insertion hole into which a nozzle having a coating liquid discharge hole is inserted, a nozzle accommodation space that accommodates the nozzle inserted into the nozzle insertion hole, an air nozzle that sprays air toward the discharge hole of the nozzle accommodated in the nozzle accommodation space, and an air guide pipe that guides to the air nozzle the air to be sprayed, wherein the air nozzle is configured to spray the air toward the discharge hole from around the nozzle.

The air nozzle may be configured to spray the air toward the coating liquid discharge hole from a coating liquid injection part of the nozzle.

The air nozzle may be configured to spray the air at an angle of 45° to 75° with respect to a longitudinal axis of the nozzle.

The air nozzle may be configured to spray the air while a coating liquid is discharged from the coating liquid discharge hole of the nozzle.

The air nozzle may include a continuous annular nozzle configured to spray air in a continuous annular shape surrounding a circumference of the nozzle toward the coating liquid discharge hole.

The air nozzle may include a segmented annular nozzle configured to spray air in a segmented annular shape surrounding a circumference of the nozzle toward the coating liquid discharge hole.

The nozzle cleaning apparatus may further comprise a regulator configured to control a pressure of the air introduced into the air guide pipe.

The nozzle cleaning apparatus may further comprise a foreign substance collection box configured to collect substances removed from the nozzle by the air sprayed from the air nozzle.

The nozzle cleaning apparatus may further include a cleaning cloth supply part that supplies, e.g. is configured to supply, a cleaning cloth that additionally cleans, e.g. is configured to additionally clean, the nozzle cleaned by the air sprayed from the air nozzle and a cleaning cloth collection part that collects, e.g. is configured to collect, the cleaning cloth used to clean the nozzle.

The cleaning cloth supply part may include a supply roll on which the cleaning cloth is wound, and the cleaning cloth collection part may include a rewinding roll on which the cleaning cloth that is unwound from the supply roll to clean the nozzle is rewound.

The nozzle cleaning apparatus may further comprise a first sensor configured to detect whether the cleaning cloth supplied by the cleaning cloth supply part is present.

The nozzle cleaning apparatus may further comprise a gripper configured to grip and fix the nozzle before the cleaning cloth performs cleaning and configured to release the nozzle after the cleaning.

The nozzle cleaning apparatus may further comprise a cleaning liquid application part configured to apply a cleaning liquid to the cleaning cloth.

The nozzle cleaning apparatus may further comprise a second sensor configured to detect whether the cleaning liquid applied to the cleaning cloth by the cleaning liquid application part is present.

The nozzle cleaning apparatus may further comprise a nozzle inspection unit configured to inspect a state of the nozzle.

According to some aspects of the present disclosure, there is provided a nozzle cleaning method including spraying air toward a coating liquid discharge hole of a nozzle, wherein the air is sprayed toward the discharge hole from around the nozzle, and cleaning the nozzle cleaned by the air using a cleaning cloth.

The spraying of the air may include spraying the air toward the coating liquid discharge hole from a coating liquid injection part of the nozzle.

The spraying of the air may include spraying the air in a form of one of a continuous annular shape and a segmented annular shape surrounding a circumference of the nozzle toward a nozzle discharge hole.

The nozzle cleaning method may further comprise applying a cleaning liquid to the cleaning cloth.

The nozzle cleaning method may further comprise inspecting a state of the nozzle.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The above and other objects, features and advantages of the present disclosure will become more apparent to those of ordinary skill in the art by describing example embodiments thereof in detail with reference to the accompanying drawings, in which:
FIG. 1 schematically illustrates a pouch-type secondary battery;
FIG. 2 is a cross-sectional view of a cylindrical secondary battery;
FIG. 3 is a cross-sectional view of a prismatic battery;
FIG. 4 is an example view of a secondary battery pack;
FIG. 5 is a perspective view of a nozzle cleaning apparatus according to some embodiments of the present disclosure;
FIG. 6 illustrates the nozzle cleaning apparatus in a state in which a nozzle is inserted into a nozzle accommodation space;
FIG. 7 is a schematic cross-sectional view along line X-X' of FIG. 6;
FIG. 8 illustrates a configuration of an air nozzle according to some embodiments;
FIG. 9 illustrates a configuration of an air nozzle according to some embodiments;
FIG. 10 illustrates a foreign substance collection box that collects substances removed from the nozzle by air sprayed from an air nozzle;
FIG. 11 illustrates a method of cleaning a nozzle by a physical cleaning method using a cleaning cloth;
FIG. 12 is a diagram of an example in which the method of FIG. 11 is embodied;
FIGS. 13A and 13B are views for describing the operation of grippers;
FIG. 14 illustrates an example in which grooves are formed in two grip surfaces of the grippers, respectively, to accommodate an outer surface of the nozzle;
FIG. 15 illustrates a nozzle cleaning apparatus using a cleaning cloth in which additional elements are included according to embodiments;
FIGS. 16A and 16B are schematic diagrams of a nozzle inspection unit for inspecting a state of the nozzle after nozzle cleaning; and
FIG. 17 is an example view of a controller for controlling the nozzle cleaning
apparatus using the cleaning cloth.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her technology in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Further, to help understand the present disclosure, the accompanying drawings are not illustrated at actual scales, but dimensions of some components may be exaggerated. The same reference numerals designate the same elements in different embodiments.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Although terms such as first and second are used to describe various components, these components are not limited by these terms. These terms are used only to distinguish a first component from a second component, and it is to be understood that the first component may be the second component unless otherwise stated.

Throughout the specification, unless otherwise stated, each element may be singular or plural.

Arranging an arbitrary element "above (or below)" or "on (or under)" another element may mean that the arbitrary element may contact the upper (or lower) surface of the element, and another element may also be interposed between the element and the arbitrary element located on (or under) the element.

Further, it will be understood that if an element is referred to as being "on," "connected to," or "coupled to" another element, it may be directly on, connected, or coupled to the other element, but still one or more other elements may be "interposed" between the elements or the elements may be "connected to" or "coupled to" one another through still another embodiment.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated. When "C to D" is stated, it means C or more and D or less, unless otherwise specified.

When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the apparatus in use or operation in addition to the orientation depicted in the figures. For example, if the apparatus in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

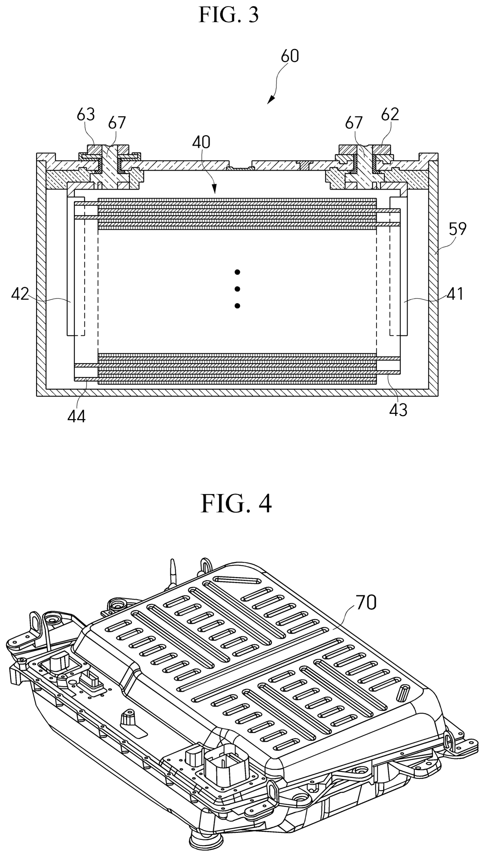

A secondary battery module/pack to be applied to an application (e.g., an energy storage system (ESS), a vehicle, or the like) can be manufactured by arranging secondary batteries. The secondary battery module/pack 70 (e.g., as shown in FIG. 4) may be manufactured to obtain desired voltage and current specifications by arranging and connecting a plurality of cells in a transverse direction and/or a longitudinal direction.

In particular, in a vehicle secondary battery pack line, to ensure a waterproof rating of a pack, an upper surface of casting can be coated with a foam sealer (glue) before a cover is assembled.

The present disclosure is directed to providing an apparatus (and method) capable of cleaning contaminants remaining at an end of a nozzle using air and a cleaning cloth after the nozzle is coated with a sealer (coating liquid) and inspecting a cleaning state.

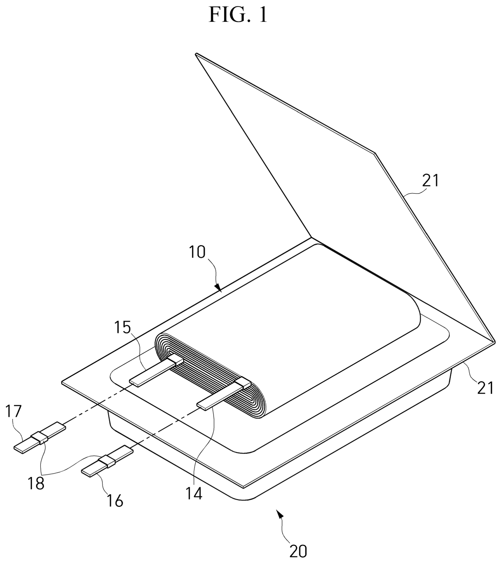

FIG. 1 schematically illustrates a pouch-type secondary battery.

The pouch-type secondary battery includes an electrode assembly 10 and a pouch 20 that accommodates the electrode assembly 10.

The electrode assembly 10 is illustrated in FIG. 1. A first electrode tab 14 and a second electrode tab 15 of the electrode assembly 10 may be electrically connected to respective external first and second terminal leads 16, 17 by welding. Each of the first terminal lead 16 and the second terminal lead 17 may be attached with a tab film 18 for insulation from the pouch 20.

The pouch 20 may be sealed by having sealing parts 21 at the edges thereof come into contact with one another while accommodating the electrode assembly 10 therein, in which case the sealing may be achieved with the tab film 18 interposed between the sealing parts 21. The sealing parts 21 of the pouch 20 may each be made of a thermal fusion material that generally has weak adhesion to metal. Thus, it may be fused to the pouch 20 by interposing the thin tab film 18 between the sealing parts 21.

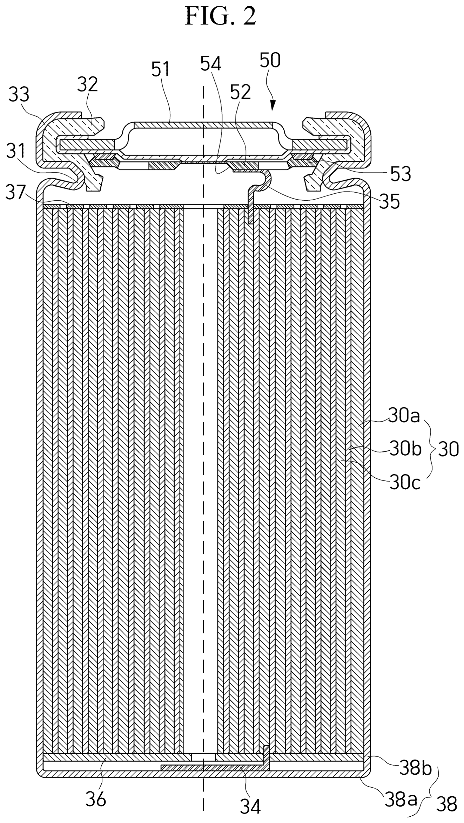

FIG. 2 illustrates a cylindrical secondary battery. As shown in FIG. 2 the secondary battery includes an electrode assembly 30, a case 38 accommodating the electrode assembly 30 and an electrolyte therein, a cap assembly 50 coupled to an opening of the case 38 so as to seal the case 38, and an insulating plate 37 positioned inside the case 38 between the electrode assembly 30 and the cap assembly 50.

The electrode assembly 30 may include a separator 30b, a first electrode 30c and a second electrode 30a positioned with the separator 30b interposed therebetween and may be wound in a jelly-roll shape.

The first electrode 30c may include a first substrate and a first active material layer on the first substrate. A first lead tab 35 may extend outwardly from a first uncoated portion of the first substrate at which the first active material layer is not located, and the first lead tab 35 may be electrically connected to the cap assembly 50.

The second electrode 30a may include a second substrate and a second active material layer on the second substrate. A second lead tab 34 may extend outwardly from a second uncoated portion of the second substrate at which the second active material layer is not located, and the second lead tab 34 may be electrically connected to the case 38. The first lead tab 35 and the second lead tab 34 may extend in opposite directions.

The first electrode 30c may act as a positive electrode. In such embodiments, the first substrate may be made of, for example, an aluminum foil, and the first active material layer may include, for example, a transition metal oxide. The second electrode 30a may act as a negative electrode. In such embodiments, the second substrate may be made of, for example, a copper foil or a nickel foil, and the second active material layer may include graphite, for example.

The separator 30b can prevent a short circuit between the first electrode 30c and the second electrode 30a while allowing movement of lithium ions therebetween. The separator 30b may be made of, for example, a polyethylene film, a polypropylene film, a polyethylene-polypropylene film, or the like.

The case 38 may accommodate the electrode assembly 30 and, together with the cap assembly 50, may form the external appearance of the secondary battery. The case 38 may have a substantially cylindrical body portion 38b and a bottom portion 38a connected to one side of the body portion 38b. A beading part 31 deformed inwardly may be formed in the body portion 38b, and a crimping part 33 bent inwardly may be formed at an open end of the body portion 38b.

The beading part 31 can reduce or prevent movement of the electrode assembly 30 inside the case 38 and can facilitate seating of a gasket 32 and the cap assembly 50. The crimping part 33 may firmly fix the cap assembly 50 by pressing the edge of the cap assembly 50 against the gasket 32. The case 38 may be formed of iron plated with nickel, for example.

The cap assembly 50 may be fixed to the inside of the crimping part 33 by the gasket 32 to seal the case 38. The cap assembly 50 may include a cap up 51, a safety vent 52, a cap down 53, an insulating member, and a sub plate 54 but is not limited thereto and may be modified in various ways.

The cap up 51 may be positioned at the uppermost part of the cap assembly 50. The cap up 51 may include a terminal part that protrudes upwardly and is connected to an external circuit, and an outlet for discharging gas may be arranged around the terminal part.

The safety vent 52 may be located under the cap up 51. The safety vent 52 may include a protrusion part that protrudes convexly downwardly and is connected to the sub plate 54 and at least one notch located around the protrusion part.

When gas is generated due to overcharging or abnormal operation of the secondary battery, the protrusion part is deformed upwardly by the pressure and separates from the sub plate 54 while the safety vent 52 is cut along the notch. The cut safety vent 52 may prevent the secondary battery from exploding by allowing for the gas to be discharged to the outside.

The cap down 53 may be below the safety vent 52. The cap down 53 may have a first opening for exposing the protrusion part of the safety vent 52 and a second opening for gas discharge. The insulating member may be positioned between the safety vent 52 and the cap down 53 to insulate the safety vent 52 and the cap down 53.

The sub plate 54 may be under the cap down 53. The sub plate 54 may be fixed to a lower surface of the cap down 53 to block the first opening of the cap down 53, and the protrusion part of the safety vent 53 may be fixed to the sub plate 54. The first lead tab 35, which is drawn out from the electrode assembly 30 may be fixed to the sub plate 54. Accordingly, the cap up 51, the safety vent 52, the cap down 53, and the sub plate 54 may be electrically connected to the first electrode 30c of the electrode assembly 30.

The insulating plate 37 may be positioned to be in contact with the electrode assembly 30 below the beading part 31. The insulating plate 37 may have a tab opening through which the first lead tab 35 is drawn out. The cap assembly 50, which is electrically connected to the first electrode 30c by the first lead tab 35, may face the electrode assembly 30 with an insulating plate 37 interposed therebetween and may maintain a state of being insulated from the electrode assembly 30 by the insulating plate 37. Meanwhile, another insulating plate 36 may be included for insulation between the electrode assembly 30 and the bottom portion 38a of the case 38.

FIG. 3 illustrates an internal configuration of the prismatic battery and a structure of a cap assembly 60.

An electrode assembly 40 may be formed by winding or stacking a stack of a first electrode plate, a separator, and a second electrode plate, which are formed as thin plates or films. When the electrode assembly 40 is a wound stack (e.g., in jelly-roll), a winding axis may be parallel to the longitudinal direction of a case 59. Further, the electrode assembly 40 is a stack type rather than a winding type, but the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to one another and accommodated in the case 59, and the number of electrode assemblies is not limited in the present disclosure. The first electrode plate of the electrode assembly 40 may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and a first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and a second current collector 42. In some embodiments, the second electrode tab 44 may be formed by being cut in advance to protrude to the other side of the electrode assembly when the second electrode plate is manufactured, or the second electrode plate may protrude to the other side of the electrode assembly 40 more than the separator without being separately cut.

FIG. 3 illustrates the first electrode tab 43 and the second electrode tab 44 respectively located on a right surface and a left surface of the electrode assembly 40, but in some embodiments, both the first electrode tab 43 and the second electrode tab 44 may be located on the right surface or the left surface of the electrode assembly 40. Further, in some other embodiments, the first electrode tab 43 and the second electrode tab 44 may be located on an upper surface of the electrode assembly 40.

Here, the left surface, the right surface, and the upper surface of the electrode assembly 40 are based on the secondary batteries illustrated in FIGS. 2 and 3 for simplicity of description. The left side means a surface of a vertical surface of the electrode assembly 40, to which the second current collector 42 is joined, and the right surface is an opposite surface thereto and means a surface to which the first current collector 41 is joined. Further, the upper surface means a surface of a horizontal surface of the electrode assembly 40, which faces the cap assembly 60 in which a first terminal 62 and a second terminal 63 are installed. Thus, the use of terms such as the left surface, the right surface, and the upper surface of the electrode assembly 40 may be changed when the secondary battery rotates in a left-right direction or a vertical direction.

The separator can prevent or substantially reduce instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 40 is accommodated in the case 59 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. As mentioned herein, in some embodiments in which the first electrode tab 43 and the second electrode tab 44 are located at the top of the electrode assembly 40, the first and second current collectors are located at the top of the electrode assembly 40.

As illustrated in FIG. 3, the first current collector 41 and the second current collector 42 are connected to the first terminal 62 and the second terminal 63 through connection members 67, respectively. In some embodiments, the connection members 67 may each have an outer peripheral surface that is threaded, and may be fastened to the first terminal 62 and the second terminal 63 by screwing. However, the present disclosure is not limited thereto. For example, the connection members 67 may also be coupled to the first terminal 62 and the second terminal 63 by riveting or welding.

FIG. 4 is an example view of a secondary battery module/pack 70 to be applied to an application (e.g., an ESS, a vehicle, or the like) by arranging secondary batteries. The secondary battery module/pack 70 may be manufactured to obtain desired voltage and current specifications by arranging and connecting a plurality of cells in a transverse direction and/or a longitudinal direction.

When the secondary battery module/pack 70 is manufactured, an upper surface of a casting can be coated with a foam sealer or glue before a cover is assembled to secure a waterproof rating. In this circumstance, a main liquid and a curing liquid can be discharged through a nozzle of a dispenser, such as a static mixer, at a certain ratio, and a shape of the sealer after the discharge is changed according to viscosity characteristics of the sealer, a coating trajectory, heights of the casting and the nozzle, a robot movement speed, and a discharge pressure. In this circumstance, a nozzle end discharge part can be contaminated by a residual material of the sealer. Over time, surface curing of this contaminant starts according to characteristics of the curing liquid, and the contaminant can block a pipe of the nozzle to cause sealer discharge amount dispersion. Further, directionality of the discharged sealer is affected by the sealer cured at an outer surface of the nozzle, and thus defects such as poor coating location and liquid breakage occur. To improve this, the inventor has developed an automatic cleaning apparatus that removes a sealer contaminant at a nozzle discharge hole.

A configuration of an automatic nozzle cleaning apparatus according to the present disclosure is a nozzle cleaning method using air, and in some embodiments, cleaning using a cleaning cloth may be added thereto. Air cleaning is a non-contact cleaning method of removing the contaminant at an end of the nozzle using a strong air blower or a strong air knife. In this cleaning method, technical problems such as, but not limited to, a spraying direction, an angle, a spraying pressure of the air, scattering of the contaminant during spraying, and collection of the contaminant can be solved. Further, cleaning using the cleaning cloth is a method of cleaning a nozzle while the nozzle is in physical contact with the cleaning cloth, and automation of the supply of the cleaning cloth, cleaning of the nozzle, and collection of the cleaning cloth can be solved.

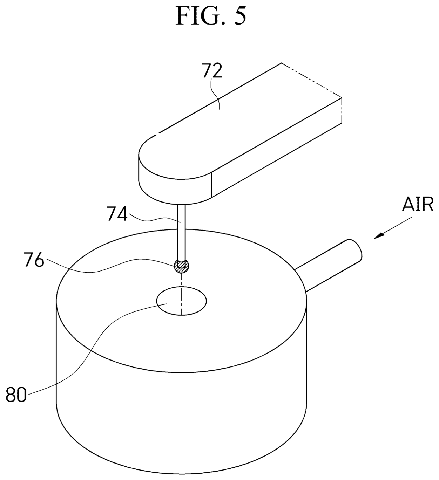

FIG. 5 is a perspective view showing an air cleaning concept of a nozzle cleaning apparatus according to some embodiments of the present disclosure.

FIG. 5 illustrates that a foreign substance 76 is formed at a coating liquid discharge hole of a nozzle 74 due to a coating operation of the nozzle 74 mounted on a dispenser 72. The nozzle cleaning apparatus includes a nozzle accommodation space 80 in which a nozzle insertion hole, into which the nozzle 74 is inserted, is provided. Air may be sprayed into the nozzle accommodation space 80 from the outside. In some embodiments, the nozzle insertion hole through which the nozzle 74 enters the nozzle accommodation space 80 is designed to have a shape and a diameter suitable for easily inserting a circular nozzle having an outer diameter of about 2 mm. Since the sealer, the coating liquid, the curing liquid, and the like are discharged from the nozzle 74, a size of the nozzle insertion hole can be determined in consideration of a thickness of the contaminant accumulated at a thickness of about 2 mm to 4 mm at the outer surface of the nozzle.

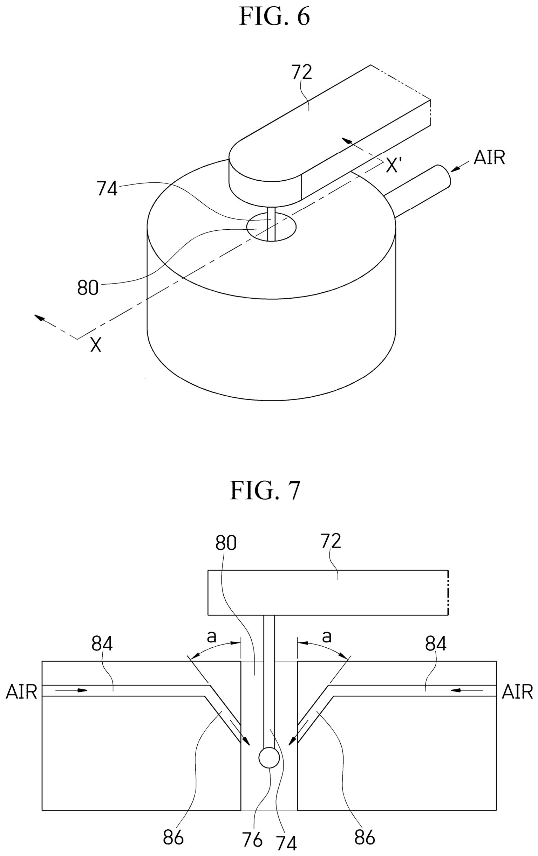

FIG. 6 illustrates the nozzle cleaning apparatus in a state in which the nozzle 74 is inserted into the nozzle accommodation space 80. In this state, the air cleaning of the nozzle 74 may be performed. An internal configuration of the nozzle cleaning apparatus will be described. FIG. 7 is a schematic cross-sectional view along line X-X' of FIG. 6.

In the nozzle cleaning apparatus according to some embodiments, an air nozzle 86 that sprays air toward the foreign substance 76 at the discharge hole of the nozzle 74 accommodated in the nozzle accommodation space 80 is inclined and installed, and an air guide pipe 84 that guides externally introduced air to the air nozzle 86 is included.

The air nozzle 86 may be inclined to spray air from a coating liquid injection part (e.g., the dispenser 72), on which the nozzle 74 is mounted, toward the discharge hole. An inclination angle a of the air nozzle 86 illustrated in FIG. 7 may be an angle of 45° to 75° with respect to a longitudinal axis of the nozzle 74. In this way, the air may be sprayed as if the discharge hole of the nozzle 74 sweeps from top to bottom (i.e., in a longitudinal direction) while the nozzle 74 discharges the coating liquid vertically downward. Thus, the nozzle cleaning apparatus according to the present disclosure may perform the cleaning in a state in which the nozzle 74 does not discharge the coating liquid and may also perform the air cleaning even while the coating liquid is discharged from nozzle 74.

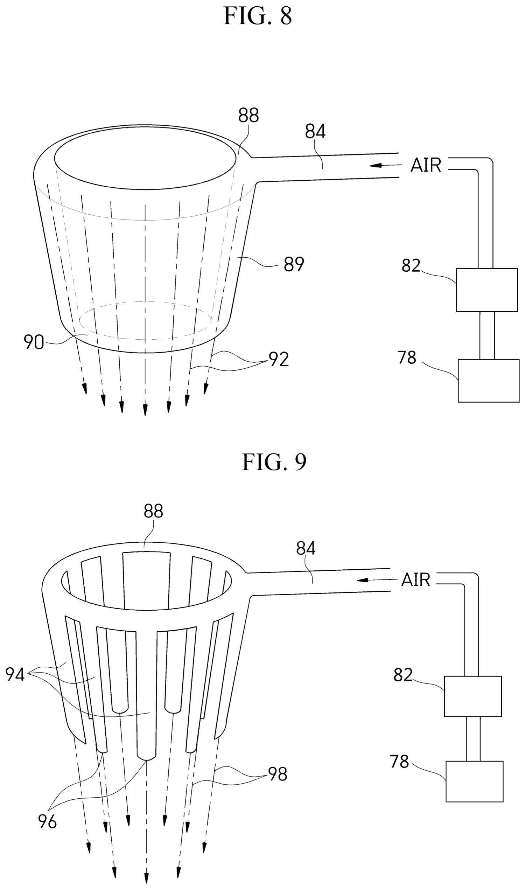

The air nozzle 86 may be configured to spray air toward the discharge hole from around the nozzle 74. This configuration will be described with reference to FIGS. 8 and 9.

FIG. 8 illustrates a configuration of an air nozzle 90 according to some embodiments. In this example, the air nozzle 90 is a continuous annular nozzle that sprays air toward the nozzle discharge hole in a continuous annular shape surrounding a circumference of the nozzle 74. In FIG. 8, the air introduced into the air guide pipe 84 may enter a guide pipe 88 extending in an annular shape, may be lowered through a vertical slit 89 extending downward in an annular shape, and may be sprayed through the continuous annular nozzle 90. Air 92 sprayed from the continuous annular nozzle 90 moves toward the discharge hole of the nozzle 74.

FIG. 9 illustrates a configuration of an air nozzle according to some embodiments. In this example, the air nozzle is embodied by segmented annular nozzles 96 that spray air toward the nozzle discharge hole in a segmented annular shape surrounding the circumference of the nozzle 74. In FIG. 9, the air introduced into the air guide pipe 84 may enter the guide pipe 88 extending in an annular shape, may be lowered through a plurality of rod-shaped vertical pipes 94 branching downward from the annular guide pipe 88, and may be sprayed through the segmented annular nozzles 96. Air 98 sprayed from the segmented annular nozzle(s) 96 moves toward the discharge hole of the nozzle 74.

In the case of FIGS. 8 and 9, the air may be sprayed toward the nozzle discharge hole in an annular shape surrounding the circumference of the nozzle 74 to remove contaminants or foreign substances attached to the discharge hole.

The air to be introduced into the air guide pipe 84 may be supplied with external blowing equipment 78, such as a compressor or a blower, through a supply pipe. In this circumstance, a regulator 82 that controls a pressure of the air to be introduced into the air guide pipe 84 may be additionally installed. The air spraying pressure may be adjusted by the regulator 82 according to a contamination state of the nozzle 74 or according to other conditions.

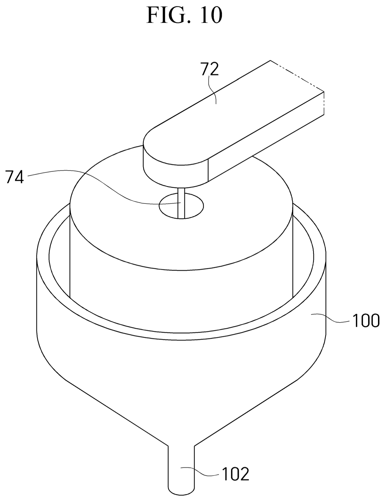

FIG. 10 illustrates a foreign substance collection box 100 that collects substances removed from the nozzle 74 by air sprayed from the air nozzle 86. When the air is sprayed, scattering of foreign substances such as contaminants may cause secondary contamination/reverse flow in the equipment, and thus foreign substances may be collected and discarded using the foreign substance collection box 100. A net filter may be included in the foreign substance collection box 100, and as illustrated in FIG. 10, an exhaust device 102 may be included under the foreign substance collection box 100.

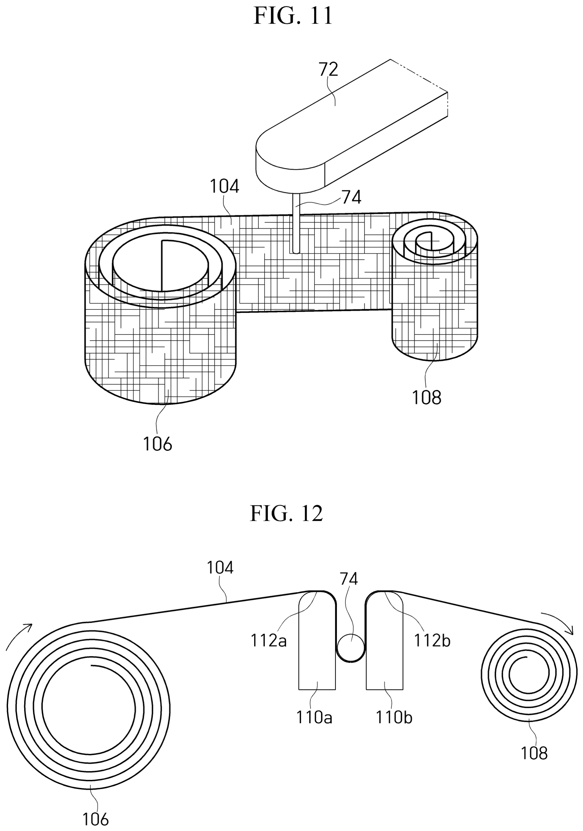

FIG. 11 illustrates a method of cleaning a nozzle in a physical cleaning method using a cleaning cloth to additionally remove residual contaminants or independent of the nozzle cleaning by the air after the nozzle is cleaned by the air. The method of FIG. 11 may be additionally implemented after or next to the method of FIG. 7 or independently implemented.

In some embodiments, the nozzle cleaning apparatus includes a cleaning cloth supply part 106 that supplies a cleaning cloth 104 that cleans the nozzle 74 while the nozzle 74 is in physical contact therewith and a cleaning cloth collection part 108 that collects the cleaning cloth 104 used to clean the nozzle 74.

FIG. 12 is a diagram of an example in which the concept of FIG. 11 is embodied. Here, the cleaning cloth supply part 106 may be implemented as a supply roll on which the cleaning cloth 104 is wound, and the cleaning cloth collection part 108 may be implemented as a rewinding roll on which the cleaning cloth 104 that is unwound from the supply roll to clean the nozzle 74 is rewound.

The cleaning cloth may be of a cartridge type and may be easily replaced, and a certain amount of the cleaning cloth 104 may be supplied through the supply roll of the cleaning cloth supply part 106 by rotation of a rewinder roll driving motor (not illustrated) in a cassette manner.

FIG. 12 illustrates grippers 110a, 110b that grip and fix the nozzle 74 before the cleaning cloth 104 performs cleaning and releases the nozzle 74 after cleaning. The grippers 110a, 110b may also include cleaning cloth support parts 112a, 112b so that the cleaning cloth 104 is wound on the nozzle 74 in half and is transferred and a tension force is provided to the cleaning cloth 104. Due to the structure illustrated in FIG. 12, the cleaning cloth 104 may come into contact with an outer surface of the nozzle 74 fixed between the pair of grippers 110a, 110b with a certain tension force to wipe out contaminants.

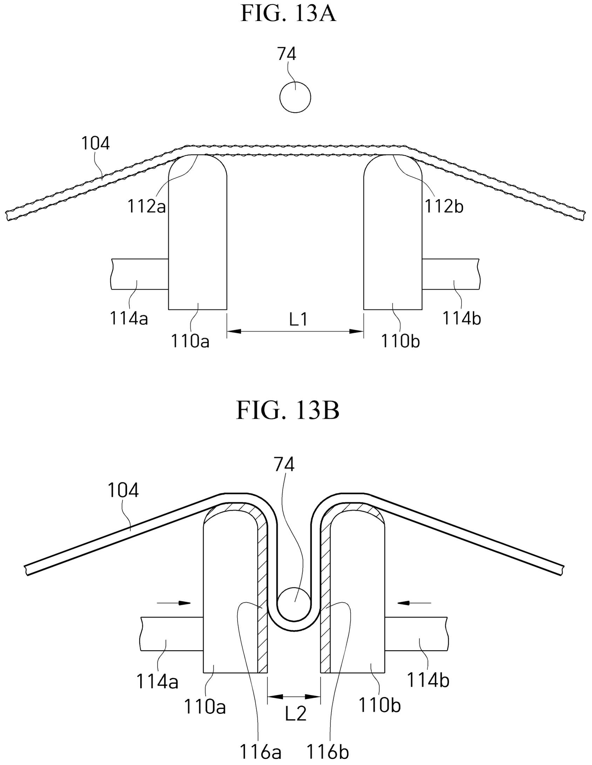

FIGS. 13A and 13B are views for describing the operation of the grippers 110a, 110b. Before the cleaning cloth 104 performs cleaning, as illustrated in FIG. 13A, the grippers 110a, 110b are spaced a distance L1 from one another, and the cleaning cloth 104 is supported by the cleaning cloth support parts 112a, 112b of the grippers 110a, 110b. Further, the nozzle 74 is positioned at a distance from the cleaning cloth 104.

Next, for the cleaning by the cleaning cloth 104, as illustrated in FIG. 13B, the nozzle 74 pushes the cleaning cloth 104 and moves between the grippers 110a and 110b. Further, the distance between the grippers 110a, 110b is decreased to a distance L2, and the grippers 110a, 110b are fixed while surrounded by the cleaning cloth 104. After the cleaning in this state, the grippers 110a, 110b are spaced apart from one another (e.g., each other) again as illustrated in FIG. 13A to release the nozzle 74.

The distance between the grippers 110a, 110b may be increased or decreased by hydraulic or pneumatic cylinders 114a, 114b that linearly move the grippers 110a, 110b.

The grippers 110a, 110b may be made of a silicone-based material for an adhesive force, and a gripping surface may be manufactured in a flat shape or round shape. Further, lubrication layers 116a, 116b made of silicone or Teflon (Teflon^{™}) may be attached or formed on the gripping surface for smooth sliding between the gripping surface and the cleaning cloth 104.

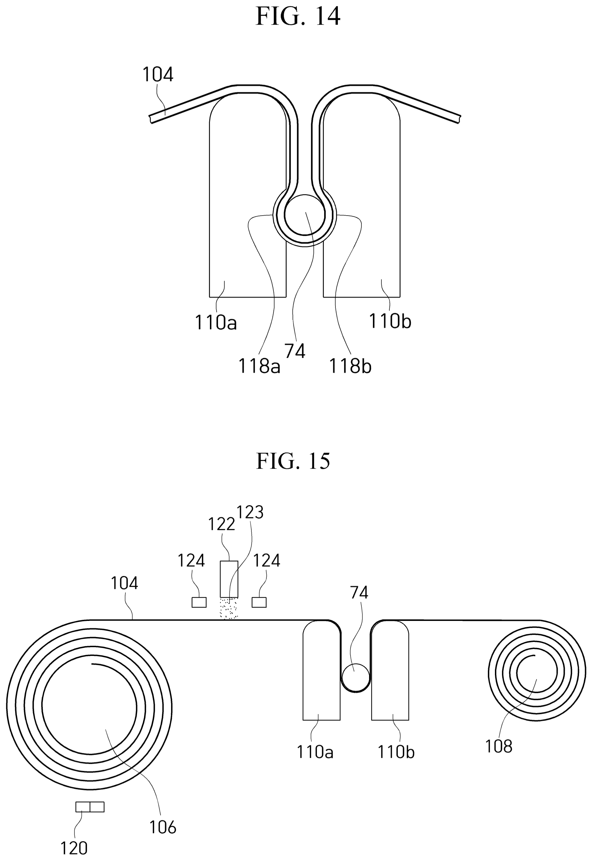

FIG. 14 illustrates an example in which grooves 118a, 118b are formed in two grip surfaces of the grippers 110a, 110b, respectively, to accommodate an outer surface of the nozzle 74.

FIG. 15 illustrates a nozzle cleaning apparatus using a cleaning cloth in which additional elements are included according to embodiments.

First, the nozzle cleaning apparatus may include a first sensor 120 that detects the presence or absence of the cleaning cloth 104 supplied by the cleaning cloth supply part 106. This sensor 120 is configured to detect whether the cleaning cloth 104 is no longer on the supply roll and newly replenish the cleaning cloth 104. The sensor 120 may be implemented as a reflective optical sensor, but the present disclosure is not limited thereto.

Next, the nozzle cleaning apparatus may include a cleaning liquid application part 122 that applies a cleaning liquid 123 to the cleaning cloth 104. In order to maximize the cleaning effect, a valve that allows the cleaning liquid 123 such as alcohol to be supplied to the cleaning cloth 104 may be applied.

Further, the nozzle cleaning apparatus may include a second sensor 124 that detects the presence or absence of the cleaning liquid 123 to recognize whether the cleaning liquid application part 122 normally applies the cleaning liquid 123 to the cleaning cloth 104. The sensor 124 may be implemented as a transmissive optical sensor, but the present disclosure is not limited thereto.

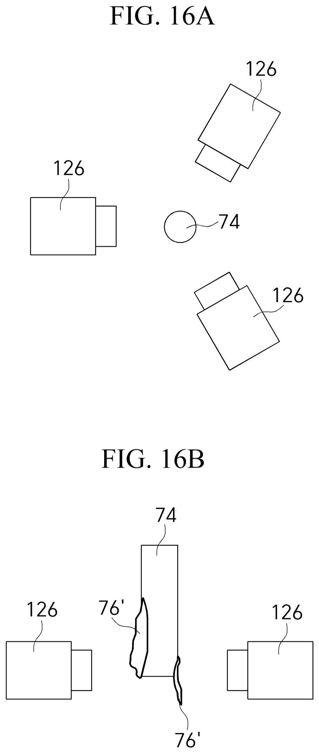

FIGS. 16A and 16B are schematic diagrams of a nozzle inspection unit for inspecting a state of the nozzle 74 after the nozzle cleaning by the air or the nozzle cleaning by the cleaning cloth 104. FIG. 16A is a plan view of the nozzle inspection unit. FIG. 16B is a side view of the nozzle inspection unit.

A plurality of cameras 126 may be installed around the nozzle 74 to photograph residual contaminants 76' attached to the nozzle 74, and this image may be visually or automatically analyzed to inspect a cleaning state. The inspection method may use a laser scanner, a vision camera, or the like. Through detection of the contaminants remaining on the outer surface of the nozzle 74, the cleaning is performed again or a nozzle replacement alarm due to an abnormal state may be generated.

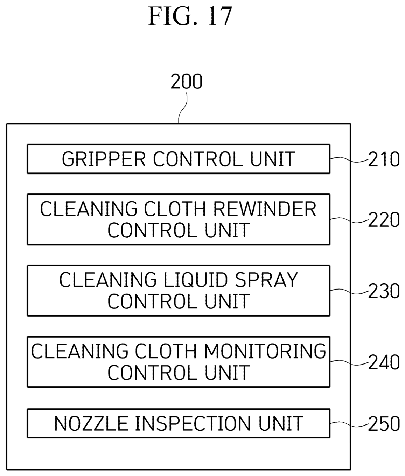

FIG. 17 is an example view of a controller 200 for controlling the nozzle cleaning apparatus using the cleaning cloth 104. The controller 200 may include a gripper control unit 210 that controls the grippers 110a, 110b, a cleaning cloth rewinder control unit 220 that controls a cleaning cloth rewinder roll, a cleaning liquid spray control unit 230 that controls the cleaning liquid application part 122 in conjunction with the cleaning liquid detection sensor 124, a cleaning cloth monitoring control unit 240 that monitors the cleaning cloth in conjunction with the cleaning cloth detection sensor 120, and a nozzle inspection unit 250 that performs nozzle inspection.

The example of the gripper control unit 210 may control the operation of the grippers 110a and 110b in FIGs. 13A and 13B. The example of the cleaning cloth rewinder control unit 220 may control the operation of rewinding the cleaning cloth with reference to FIG. 12. The example of the cleaning liquid spray control unit 230 may control the operation of the cleaning liquid application part 122 and the second sensor 124 in FIG. 15. The example of the cleaning cloth monitoring control unit 240 may monitor the cleaning cloth in conjunction with the cleaning cloth detection sensor 120 with reference to FIG. 15. The example of the nozzle inspection unit 250 may be the nozzle inspection unit shown in FIG. 16A including a camera.

Hereinafter, a nozzle cleaning method according to some embodiments of the present disclosure will be briefly described.

The nozzle cleaning method includes an operation of spraying air toward the coating liquid discharge hole of the nozzle 74, the air being sprayed toward the discharge hole from around the nozzle 74, and an operation of cleaning the nozzle 74 cleaned by the air with the cleaning cloth 104.

In some embodiments, in the air spraying operation, the air may be sprayed from the coating liquid injection part of the nozzle 74 toward the discharge hole.

In some embodiments, in the air spraying operation, air in the form of one of a continuous annular shape and a segmented annular shape surrounding the circumference of the nozzle 74 may be sprayed toward the discharge hole of the nozzle 74.

The nozzle cleaning method according to some embodiments of the present disclosure may further include an operation of applying the cleaning liquid to the cleaning cloth 104. Further, the nozzle cleaning method according to some embodiments of the present disclosure may further include a nozzle inspection operation of inspecting a state of nozzle 74.

An automatic cleaning apparatus using an air knife and a cleaning cloth before contaminants remaining at an end of a nozzle are cured after the nozzle is coated with a sealer is developed and a vision inspecting apparatus capable of inspecting a nozzle contamination/cleaning state is applied. Thus, it is possible to minimize loss of mass production lines due to productivity improvement, defect rate improvement, and facility maintenance ease by automating nozzle cleaning/inspection.

Although the present disclosure has been described above with respect to embodiments thereof, the present disclosure is not limited thereto. Various modifications and variations can be made thereto by those skilled in the art within the scope of the present disclosure.

## Claims

1. A nozzle cleaning apparatus comprising:
a nozzle insertion hole into which a nozzle is inserted, wherein the nozzle has a coating liquid discharge hole;
a nozzle accommodation space configured to accommodate the nozzle inserted into the nozzle insertion hole;
an air nozzle configured to spray air toward the coating liquid discharge hole of the nozzle accommodated in the nozzle accommodation space; and
an air guide pipe configured to guide to the air nozzle air introduced into the air guide pipe,
wherein the air nozzle is configured to spray the air toward the coating liquid discharge hole from around the nozzle.

2. The nozzle cleaning apparatus as claimed in claim 1, wherein the air nozzle is configured to spray the air toward the coating liquid discharge hole from a coating liquid injection part of the nozzle.

3. The nozzle cleaning apparatus as claimed in claim 1 or 2, wherein the air nozzle is configured to spray the air while a coating liquid is discharged from the coating liquid discharge hole of the nozzle.

4. The nozzle cleaning apparatus as claimed in claim 1, 2 or 3, wherein the air nozzle includes a continuous annular nozzle configured to spray air in a continuous annular shape surrounding a circumference of the nozzle toward the coating liquid discharge hole.

5. The nozzle cleaning apparatus as claimed in claim 1, 2 or 3, wherein the air nozzle includes a segmented annular nozzle configured to spray air in a segmented annular shape surrounding a circumference of the nozzle toward the coating liquid discharge hole.

6. The nozzle cleaning apparatus as claimed in any preceding claim, further comprising a regulator configured to control a pressure of the air introduced into the air guide pipe.

7. The nozzle cleaning apparatus as claimed in any preceding claim further comprising a foreign substance collection box configured to collect substances removed from the nozzle by the air sprayed from the air nozzle.

8. The nozzle cleaning apparatus as claimed in any preceding claim, further comprising:
a cleaning cloth supply part configured to supply a cleaning cloth configured to additionally clean the nozzle cleaned by the air sprayed from the air nozzle; and
a cleaning cloth collection part configured to collect the cleaning cloth used to clean the nozzle.

9. The nozzle cleaning apparatus as claimed in claim 8, wherein the cleaning cloth supply part includes a supply roll on which the cleaning cloth is wound, and
wherein the cleaning cloth collection part includes a rewinding roll on which the cleaning cloth that is unwound from the supply roll to clean the nozzle is rewound.

10. The nozzle cleaning apparatus as claimed in claim 8 or 9, further comprising a first sensor configured to detect whether the cleaning cloth supplied by the cleaning cloth supply part is present.

11. The nozzle cleaning apparatus as claimed in claim 8, 9 or 10, further comprising a cleaning liquid application part configured to apply a cleaning liquid to the cleaning cloth.

12. The nozzle cleaning apparatus as claimed in any preceding claim, further comprising a nozzle inspection unit configured to inspect a state of the nozzle.

13. A nozzle cleaning method comprising:
spraying air toward a coating liquid discharge hole of a nozzle,
wherein the air is sprayed toward the coating liquid discharge hole from around the nozzle; and
cleaning the nozzle cleaned by the air using a cleaning cloth.

14. The nozzle cleaning method as claimed in claim 13, further comprising applying a cleaning liquid to the cleaning cloth.

15. The nozzle cleaning method as claimed in claim 13 or 14, further comprising inspecting a state of the nozzle.
